# NEUE EUROPÄISCHE PATENTSCHRIFT

(11) **EP 2 827 967 B2**
(45) Veröffentlichungstag und Bekanntmachung des Hinweises auf die Entscheidung über den Einspruch: **08.02.2023**
(45) Hinweis auf die Patenterteilung: 30.05.2018
(21) Anmeldenummer: 13701749.7
(22) Anmeldetag: 22.01.2013
(51) Int. Cl.: B01D 46/52

(54) **FILTERELEMENT EINES FILTERS ZUR FILTRIERUNG VON FLUIDEN UND FILTER**
FILTER ELEMENT OF A FILTER FOR FILTERING FLUIDS, AND FILTER
ELÉMENT DE FILTRAGE D'UN FILTRE POUR LE FILTRAGE DE FLUIDES ET FILTRE

(30) Priorität: 21.03.2012 DE 102012005532
(43) Veröffentlichungstag der Anmeldung: 28.01.2015
(73) Patentinhaber: MANN+HUMMEL GmbH, 71636 Ludwigsburg (DE)
(72) Erfinder: MBADINGA-MOUANDA, Gelase, 74321 Bietigheim-Bissingen (DE); GEHWOLF, Klaus, 94437 Mamming (DE)
(74) Vertreter: Maiwald GmbH
(86) Internationale Anmeldenummer: PCT/EP2013/051087
(87) Internationale Veröffentlichungsnummer: WO 2013/139500

(56) Entgegenhaltungen:
- EP-A1- 1 059 108
- WO-A1-02/055179
- WO-A1-2011/026999
- DE-A1- 4 345 121
- US-A1- 2005 139 544
- US-B2- 7 661 540

## Beschreibung

### Technisches Gebiet

Die Erfindung betrifft ein Filterelement eines Filters zur Filtrierung von Fluiden, insbesondere von Gasen, insbesondere von Ansaugluft, insbesondere einer Brennkraftmaschine, insbesondere eines Kraftfahrzeugs, mit einem zickzackförmig gefalteten Filtermedium mit einer Rohfluidseite und einer Reinfluidseite, wobei auf der Rohfluidseite und/oder auf der Reinfluidseite des Filtermediums wenigstens ein länglicher Stützabschnitt auf einer entsprechenden Oberfläche des Filtermediums angeordnet ist, der wenigstens abschnittsweise schräg oder senkrecht zu Faltkanten des Filtermediums verläuft, wobei eine Höhenausdehnung des wenigstens einen Stützabschnitts senkrecht zu der Oberfläche des Filtermediums entlang seiner Längsrichtung in Richtung von einem Faltengrund zu einer Faltenspitze einer Falte des Filtermediums zunimmt, so dass der wenigstens eine Stützabschnitt bei dem gefalteten Filtermedium jeweils mit seiner der Oberfläche des Filtermediums abgewandten freien Seite an einer entsprechenden freien Seite eines in einem Faltenzwischenraum gegenüberliegenden Stützabschnitts oder an der Oberfläche eines im Faltenzwischenraum gegenüberliegenden Mediumabschnitts anliegt.

Ferner betrifft die Erfindung einen Filter zur Filtrierung von Fluiden, insbesondere von Gasen, insbesondere von Ansaugluft, insbesondere einer Brennkraftmaschine, insbesondere eines Kraftfahrzeugs, mit einem Filterelement, insbesondere einem erfindungsgemäßen Filterelement, mit einem zickzackförmig gefalteten Filtermedium mit einer Rohfluidseite und einer Reinfluidseite, wobei auf der Rohfluidseite und/oder auf der Reinfluidseite des Filtermediums wenigstens ein länglicher Stützabschnitt auf einer entsprechenden Oberfläche des Filtermediums angeordnet ist, der wenigstens abschnittsweise schräg oder senkrecht zu Faltkanten des Filtermediums verläuft, wobei eine Höhenausdehnung des wenigstens einen Stützabschnitts senkrecht zu der Oberfläche des Filtermediums entlang seiner Längsrichtung in Richtung von einem Faltengrund zu einer Faltenspitze einer Falte des Filtermediums zunimmt, so dass der wenigstens eine Stützabschnitt bei dem gefalteten Filtermedium jeweils mit seiner der Oberfläche des Filtermediums abgewandten freien Seite an einer entsprechenden freien Seite eines in einem Faltenzwischenraum gegenüberliegenden Stützabschnitts oder an der Oberfläche eines im Faltenzwischenraum gegenüberliegenden Mediumabschnitts anliegt.

### Stand der Technik

Aus WO 2002/055179 A1, US 7,661,540 B2, DE 43 45 121 A1 und EP 1059108 A1 sind Ausführungen von Filterelementen mit Beabstandungsmitteln für Falten bekannt. Aus der WO 2011/026999 A1 ist ein Filter zur Filtrierung von Fluiden mit einem Filterelement mit einem zickzackförmig gefalteten Filtermedium mit einer Rohseite und einer Reinseite bekannt. Auf der Rohseite und/oder auf der Reinseite des Filtermediums ist eine Mehrzahl von länglichen Klebstoffabschnitten entlang von mindestens zwei Klebstoffspuren auf dem Filtermedium angeordnet, die wenigstens abschnittsweise schräg oder senkrecht zu Faltkanten verlaufen. Auf jeder Klebstoffspur sind wenigstens ein Klebstoffabschnitt und wenigstens eine Klebstoffunterbrechung angeordnet. Die Ausdehnung der Klebstoffabschnitte senkrecht zum Filtermedium entlang der Klebstoffspur variiert, sodass die Klebstoffabschnitte bei dem gefalteten Filtermedium jeweils mit ihrer dem Filtermedium abgewandten freien Seite an einer entsprechenden freien Seite eines in einem Faltenzwischenraum gegenüberliegenden Klebstoffabschnittes oder an der Oberfläche eines Faltenzwischenraum gegenüberliegenden Mediumabschnitts flächig anliegt.

Der Erfindung liegt die Aufgabe zugrunde, ein Filterelement und einen Filter der eingangs genannten Art auszugestalten, bei dem der wenigstens eine Stützabschnitt mit einem möglichst geringen Herstellungsaufwand und Materialaufwand realisiert werden kann. Insbesondere sollte der wenigstens eine Stützabschnitt möglichst platzsparend realisiert sein. Ein Verhältnis von effektiver Filterfläche zur Gesamtfläche des Filtermediums soll möglichst groß sein.

### Offenbarung der Erfindung

Diese Aufgabe wird erfindungsgemäß durch den Gegenstand des Anspruchs 1 gelöst, bei dem eine Breitenausdehnung des wenigstens einen Stützabschnitts parallel zu der Oberfläche des Filtermediums und senkrecht zu seiner Längenausdehnung in Richtung von der Faltenspitze zu dem Faltengrund der Falte des Filtermediums abnimmt.

Erfindungsgemäß hat der wenigstens eine Stützabschnitt also von der Faltenspitze aus betrachtet einen sich insgesamt verjüngenden Querschnitt Unter der Breitenausdehnung versteht sich die Breite eines entsprechenden Querschnitts des Stützabschnitts in einer Querschnittsebene senkrecht zur Längsrichtung. Entsprechend ist die Höhenausdehnung die Höhe des entsprechenden Querschnitts des Stützabschnitts in dieser Querschnittsebene. Eine Längenausdehnung ist die maximale Länge des Stützabschnitts. Die Fläche des Filtermediums, welche durch den wenigstens einen Stützabschnitt bedeckt ist, wird insgesamt verringert. So wird die effektive Filterfläche des Filtermediums bei gleichbleibender Gesamtfläche vergrößert. Außerdem wird so weniger Material zur Realisierung des Stützabschnittes benötigt. Dies führt des Weiteren zu einer Gewichtsersparnis bei dem Filterelement. Ferner wird durch die Verjüngung des wenigstens einen Stützabschnitts das freie Volumen in den Faltenzwischenräumen vergrößert. Die Beladungsgrenze des Filterelementes wird somit vergrößert und somit auch dessen Standzeit. Vorteilhafterweise kann eine Längenausdehnung des wenigstens einen Stützabschnitts in einem Faltenzwischenraum zwischen etwa 250 mm und etwa 400 mm, vorzugsweise etwa 280 mm, betragen. Die Breitenausdehnung an der breitesten Stelle kann vorteilhafterweise zwischen etwa 1 mm und etwa 3 mm, vorzugsweise etwa 2 mm, betragen. Die Höhenausdehnung an der höchsten Stelle kann vorteilhafterweise zwischen etwa 0,8 mm und etwa 2 mm, vorzugsweise etwa 1,2 mm, betragen. An der schmalsten Stelle kann die Breitenausdehnung etwa zwischen 0,3 mm und 0,6 mm, vorzugsweise etwa 0,45 mm, betragen. Die Höhenausdehnung an der niedrigsten Stelle kann etwa zwischen 0,6 mm und 0,9 mm, vorzugsweise etwa 0,75 mm, betragen. Durch die Verjüngung des Stützabschnittes zum Faltengrund hin können etwaige innere mechanische Spannungen verringert werden, welche zu einem Auseinanderdrücken des Faltenzwischenraums am Faltengrund führen kann. Auf diese Weise kann die Form der Faltenzwischenräume optimiert werden.

Erfindungsgemäß ist der wenigstens eine Stützabschnitt aus einem Klebstoff realisiert,

Bei einer vorteilhaften Ausführungsform kann der wenigstens eine Stützabschnitt zumindest auf seiner dem Filtermedium abgewandten Seite einen Querschnitt ähnlich einem Segment einer kreisartigen oder ellipsenartigen Fläche haben. Der wenigstens eine Stützabschnitt kann also insgesamt etwa die Form eines Kegels oder eines Kegelstumpfs mit einer etwa kreisartigen oder ellipsenartigen Grundfläche haben. Die Grundfläche und somit der Kegelmantel oder Kegelstumpfmantel können auf der dem Filtermedium zugewandten Seite und/oder der dem gegenüberliegenden Stützabschnitt oder der Oberfläche des im Faltenzwischenraum gegenüberliegenden Mediumabschnitts zugewandten Seite abgeflacht sein. Auf diese Weise kann die Breite in Richtung der Breitenausdehnung einer Berührungsfläche seiner der Oberfläche des Filtermediums abgewandten freien Seite mit der entsprechenden Oberfläche des in dem Faltzwischenraum gegenüberliegenden Stützabschnitts oder des in dem Faltenzwischenraum gegenüberliegenden Medienabschnitts minimiert werden. Der Stützabschnitt kann ferner einfach, insbesondere mittels einer Düse, auf das Filtermedium aufgetragen werden. Ein kreisartiger oder ellipsenartiger Querschnitt kann einfach realisiert werden. Der wenigstens eine Stützabschnitt kann beim Aufstellen der Falten mit seiner freien Seite einfach gegen den gegenüberliegenden Stützabschnitt oder den gegenüberliegenden Mediumabschnitt gepresst werden. Dabei kann beim Aufstellen der Falten etwa noch weiches Material, aus dem der wenigstens eine Stützabschnitt gebildet wird, durch das Anpressen in vorgebbarem Maße abgeflacht werden. Auf diese Weise kann die Berührungsfläche in ihrer Breite variiert werden.

Bei einer weiteren vorteilhaften Ausführungsform kann ein Verhältnis der Höhenausdehnung des wenigstens einen Stützabschnitts zu der Breitenausdehnung über die Längenausdehnung etwa konstant sein. Das Verhältnis der Höhenausdehnung zur Breitenausdehnung kann einfach insbesondere durch Vorgabe des Materials, aus dem der Stützabschnitt gebildet wird, einer Geometrie eines Werkzeugs zum Aufbringen des Materials, insbesondere einer Düsengeometrie, einer Auftragsgeschwindigkeit mit der das Material des Stützabschnitts auf das Filtermedium aufgebracht wird, des Materials und der Eigenschaften des Filtermedium und/oder eines Dosierkopfes einer Düse beeinflusst werden. Mit einem konstanten Verhältnis der Höhenausdehnung zur Breitenausdehnung kann ein gleichmäßiger Stützabschnitt realisiert werden. Mit dem gleichmäßigen Stützabschnitt kann eine gleichmäßige Stützfunktion realisiert werden. Ein gleichmäßiger Stützabschnitt kann zu einem gleichmäßigen Strömungsverlauf des Fluids in den Faltenzwischenräumen führen.

Vorteilhafterweise kann das Verhältnis der Höhenausdehnung zur Breitenausdehnung zwischen etwa 1/5 und etwa 5/5, vorzugsweise größer als etwa 3/5, sein. Experimente haben ergeben, dass so eine optimale Stützfunktion des wenigstens einen Stützabschnitts bei möglichst großer effektiver Filterfläche realisiert werden kann.

Bei einer weiteren vorteilhaften Ausführungsform kann sich der wenigstens eine Stützabschnitt über wenigstens eine Faltkante erstrecken. Vorteilhafterweise kann sich der wenigstens eine Stützabschnitt über eine Faltkante einer Faltenspitze erstrecken. Auf diese Weise können die Falten durch den wenigstens einen Stützabschnitt weiter stabilisiert werden. Außerdem kann so die Aufbringung des wenigstens einen Stützabschnitts vereinfacht werden. Eine Materialzufuhr muss im Bereich der Faltkante nicht unterbrochen werden. Im Bereich der Faltkante kann das Verhältnis der Höhenausdehnung zur Breitenausdehnung geringer sein als im übrigen Bereich der Falte. So kann im Bereich eines Faltengrundes verhindert werden, dass überschüssiges Material für den Stützabschnitt zur Aufweitung des Faltenzwischenraums dort führt. Im Bereich einer Faltenspitze kann so verhindert werden, dass der wenigstens einen Stützabschnitt das Faltenmedium außerhalb des Faltenbalges zu weit überragt.

Ferner kann sich vorteilhafterweise der wenigstens eine Stützabschnitt in einem Faltengrund nicht über eine dortige Faltkante erstrecken. Auf diese Weise kann vermieden werden, dass der wenigstens eine Stützabschnitt die in einem Faltenzwischenraum gegenüberliegenden Mediumabschnitte im Bereich des Faltengrundes auseinanderdrückt So kann vermieden werden, dass der Stützabschnitt im Bereich des Faltengrundes die Form der Falte in unerwünschter Art beeinflusst. Vorteilhafterweise kann der wenigstens eine Stützabschnitt in einem Abstand von wenigstens 1 mm, vorzugsweise mehr als 1,5 mm, von der Faltkante im Faltengrund enden. So kann verhindert werden, dass etwaiger Überschuss an Material zur Realisierung des Stützabschnittes zu einer Verbauchung oder Verbreiterung des Faltenzwischenraums führt. Dies könnte die optimale Form der Falte negativ beeinflussen.

Vorteilhafterweise können die Falten des Filtermediums etwa V-förmig sein. Mit V-förmigen Falten kann beim Betrieb des Filterelementes ein Druckgefälle zwischen der Rohfluidseite und der Reinfluidseite verringert werden. Außerdem kann mit V-förmigen Falten eine optimale Beladungskapazität des Filterelementes erreicht werden.

Erfindungsgemäß sind in dem Faltenzwischenraum aneinander anliegende Seiten des wenigstens einen Stützabschnitts und des gegenüberliegenden Stützabschnitts oder des gegenüberliegenden Mediumabschnitts miteinander verklebt. Durch eine Verklebung kann eine optimale Verbindung der zweiten realisiert werden. Mit einer Verklebung können darüber hinaus auch dichte Verbindungen realisiert werden. Eine Verklebung kann einfach realisiert werden. Insbesondere kann der Stützabschnitt aus einem Material sein, welches beim Aufstellen der Falten noch klebfähig ist und dadurch eine Klebewirkung erzeugt. Nach dem aufstellen kann das Material trocknen und aushärten und die Verklebung stabilisieren. Alternativ kann vor dem Aufstellen der Falten ein separates Klebemittel auf den wenigstens einen Stützabschnitt und/oder den gegenüberliegenden Stützabschnitt und/oder den gegenüberliegenden Mediumabschnitt aufgebracht werden.

Vorteilhafterweise können in dem Faltenzwischenraum aneinander anliegende Seiten des wenigstens einen Stützabschnitts und des gegenüberliegenden Stützabschnitts oder des gegenüberliegenden Mediumabschnitts miteinander einen in Richtung der Breitenausdehnung und in Richtung der Längenausdehnung flächigen Kontakt haben. Im Unterschied zu einem linienartigen Kontakt sind bei dem flächigen Kontakt die Verläufe der gegenüberliegenden Oberflächen in Richtung der Breitenausdehnung und in Richtung der Längenausdehnung mit bloßem Auge deutlich erkennbar aneinander angepasst. Mit einem flächigen Kontakt kann eine optimale Verbindung erzeugt werden. Auf diese Weise können die Abstützkräfte, welche mit dem Stützabschnitt übertragen werden, gleichmäßig übertragen werden.

Bei einer weiteren vorteilhaften Ausführungsform kann der wenigstens eine Stützabschnitt in Längsrichtung wenigstens eine Unterbrechung aufweisen. Durch die wenigstens eine Unterbrechung kann das zu filtrierende Fluid von einer Seite des Stützabschnitts zur anderen gelangen. So kann ein Strömungsverlauf des Fluides in den Faltenzwischenräumen positiv beeinflusst werden. In den Unterbrechungen werden Strömungsbereiche realisiert, in denen das zu filtrierende Fluid im Wesentlichen senkrecht zu den Faltkanten geleitet werden kann. Auf diese Weise können Strömungsbereiche gleichmäßig mit Fluid beaufschlagt werden, So können Ausgleichsströmungen zwischen benachbarten Strömungsbereichen, welche durch den wenigstens einen Stützabschnitt voneinander getrennt werden, ermöglicht werden. Diese Fluidverbindungen, die durch die Unterbrechungen realisiert sind, können für eine möglichst gleichmäßige Druckverteilung zwischen den Strömungsbereichen sorgen.

Vorteilhafterweise können die Unterbrechungen von Stützabschnitten, die auf gegenüberliegenden Seiten des Filtermediums oder auf einer Seite des Filtermediums nebeneinander angeordnet sind, zueinander versetzt sein. Vorteilhafterweise können auf der Rohfluidseite und auf der Reinfluidseite Segmente der Stützabschnitte so angeordnet sein, dass wenigstens eines der Segmente auf der Rohfluidseite wenigstens eine der Unterbrechungen auf der Reinfluidseite in Längsrichtung beidseitig überragt und mit seinen Enden mit den Segmenten des Stützabschnitts auf der Reinfluidseite überlappt, die an die Unterbrechung angrenzen, und/oder wenigstens eines der Segmente des Stützabschnitts auf der Reinfluidseite wenigstens eine der Unterbrechungen auf der Rohfluidseite beidseitig überragt und mit seinen Enden mit den Segmenten des Stützabschnitts auf der Rohfluidseite überlappt, die an die Unterbrechung angrenzen. Durch die sich gegenseitig überlappenden Stützabschnittsegmente auf der Reinfluidseite als auch auf der Rohfluidseite kann die Stabilität der Falten insgesamt erhöht werden. So können Lücken in der Stützung des Filtermediums vermieden werden. Die Überlappung der Stützabschnitte kann eine Kraftübertragung der Stützabschnitte auf der Reinfluidseite auf die entsprechenden Stützabschnitte auf der Rohfluidseite verbessern.

Bei einer weiteren vorteilhaften Ausführungsform kann der wenigstens eine Stützabschnitt aus einem Schmelzklebstoff, insbesondere auf Basis von Polyamid, Polyolefin, Ethylenvinylacetat (EVA), realisiert sein. Mit Klebstoff kann der wenigstens eine Stützabschnitt einfach und schnell auf das Filtermedium aufgebracht werden. Hierzu können insbesondere Düsenanordnungen verwendet werden. Durch die Verwendung von Klebstoff zur Realisierung des wenigstens einen Stützabschnittes kann auf den Einsatz von separatem Klebstoff zum Verkleben der freien Seite des Stützabschnittes mit dem gegenüberliegenden Stützabschnitt oder dem gegenüberliegenden Mediumabschnitt verzichtet werden, Ein Schmelzklebstoff kann einfach bei der Verarbeitung erwärmt und damit erweicht werden. Beim Abkühlen trocknet der Schmelzklebstoff und härtet aus. Ein aus Klebstoff realisierter Stützabschnitt kann auch als Leimraupe bezeichnet werden.

Vorteilhafterweise kann der wenigstens eine Stützabschnitt aus einem aufgeschäumten Klebstoff realisiert sein. Auf diese Weise kann die Menge an benötigtem Klebstoff verringert werden. Vorzugsweise kann wenigstens 50 % des Volumens des wenigstens einen Stützabschnitts durch Gaseinschlüsse gebildet sein. Die Gaseinschlüsse entstehen beim Aufschäumen. Durch das Aufschäumen des Klebstoffes kann die Flexibilität des wenigstens einen Stützabschnitts verbessert werden. Der aufgeschäumte Klebstoff kann einen Expansionsdrang aufweisen. Dies kann eine Dichtheit der Verbindung des wenigstens einen Stützabschnitts mit der Oberfläche des gegenüberliegenden Stützabschnitts oder des gegenüberliegenden Mediumabschnitts verbessern. Ferner kann aufgeschäumter Klebstoff schneller abbinden als nicht aufgeschäumter Klebstoff. Auf diese Wiese kann eine Produktionsgeschwindigkeit erhöht werden. Insbesondere bei einer Aufbringung des Klebstoffs mit einer Düse auf eine durchlaufende Filtermediumbahn kann eine Bahngeschwindigkeit erhöht werden. Aufgeschäumter Klebstoff kann beim Aufstellen der Falten mit einem geringeren Kraftaufwand verpresst werden als nicht aufgeschäumter Klebstoff. Eine Krafteinwirkung von überschüssigem Klebstoff auf die Falten kann so verringert werden. Dies kann sich positiv auf den Erhalt der gewünschten Faltenform auswirken. Mit aufgeschäumtem Klebstoff kann darüber hinaus eine Penetration von etwa porösen oder unebenen Oberflächen des Filtermediums verbessert werden. Aufgeschäumter Klebstoff kann tiefer in Poren der Oberfläche eindringen als nicht aufgeschäumter Klebstoff. Fülleigenschaften des Klebstoffes können so verbessert werden. Mit aufgeschäumtem Klebstoff können Strukturunebenheiten des Filtermediums kompensiert werden. Aufgeschäumter Klebstoff kann darüber hinaus auch an gegenüber der Horizontalen geneigten oder vertikalen Oberflächen aufgebracht werden. Mit aufgeschäumtem Klebstoff können thixotrope Eigenschaften des wenigstens einen Stützabschnitts verbessert werden. Insgesamt können durch die Verwendung von aufgeschäumtem Klebstoff der Produktionsaufwand, insbesondere Produktionszeiten, und der Materialaufwand verringert werden.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden, Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: eine isometrische Darstellung eines Fluidfilters gemäß einem ersten Ausführungsbeispiel;
- Figur 2: eine isometrische Darstellung eines Fluidfilters gemäß einem zweiten Ausführungsbeispiel;
- Figur 3: eine isometrische Darstellung eines Filterbalgs eines Fluidfilters mit zickzackförmig gefaltetem Filtermedium, wie er bei den Fluidfiltern aus den Figuren 1 und 2 zum Einsatz kommt;
- Figur 4: eine Seitenansicht eines Ausschnitts des Filtermediums des Filterbalges aus der Figur 4 nach der Aufbringung von Stützleimraupen auf einer Seite des Filtermediums und vor dem Aufstellen der Falten;

- Figur 5: ein isometrischer Ausschnitt des Filtermediums aus der Figur 4 in einer Phase beim Aufstellen der Falten;
- Figur 6: eine isometrische Darstellung eines Teils einer Stützleimraupe des Filterbalgs aus den Figuren 3 bis 5;
- Figur 7: einen Schnitt eines Ausschnittes des Filterbalges mit dem gefalteten Filtermedium aus den Figuren 3 bis 6, bei dem jeweils freie Seiten von gegenüberliegenden Stützleimraupen in einem Faltenzwischenraum flächig aneinander anliegen;
- Figur 8: einen Ausschnitt eines Filtermediums eines Filterbalges gemäß einem weiteren Ausführungsbeispiels nach Aufbringung der Stützleimraupen in einer Phase beim Aufstellen der Falten, wobei sich die Stützleimraupen nicht über Faltkanten in Faltengründen der Falten erstrecken;
- Figur 9: schematisch im Schnitt das nicht gefaltete Filtermedium des Faltenbalgs aus der Figur 4, auf das rohfluidseitig und reinfluidseitig jeweils Stützleimraupen mittels Düsen aufgebracht werden;
- Figur 10: schematisch im Schnitt einen Ausschnitt eines weiteren Ausführungsbeispiels eines Faltenbalges ähnlich zu dem Faltenbalg aus der Figur 4, bei dem die Stützleimraupen in einem Faltenzwischenraum unterbrochen sind.

In den Figuren sind gleiche Bauteile mit gleichen Bezugszeichen versehen.

### Ausführungsform(en) der Erfindung

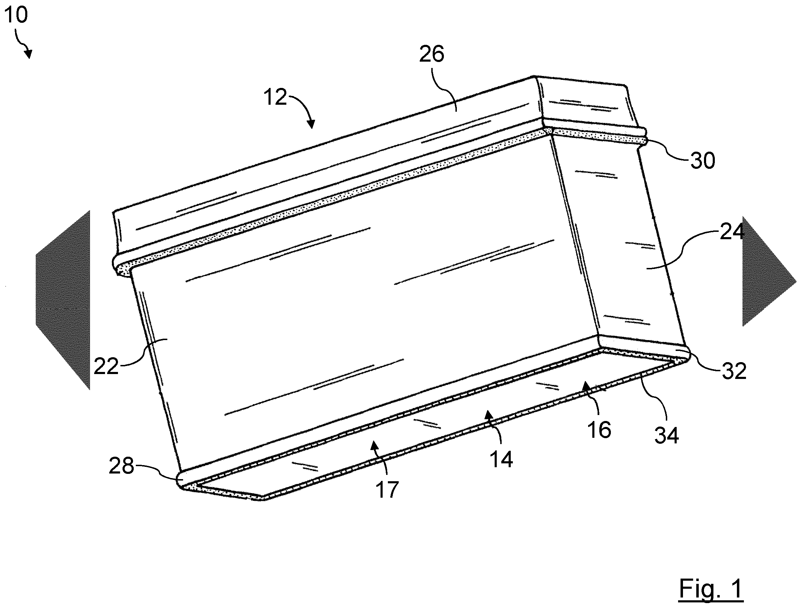

In der Figur 1 ist ein Filterelement 10 gemäß einem ersten Ausführungsbeispiel gezeigt. Das Filterelement kann in einem nicht gezeigten Filtergehäuse eines Filters für ein Fluid eingebaut werden. Mit dem Filterelement 10 können gasförmige oder flüssige Fluide filtriert werden. Beispielsweise kann ein derartiges Filterelement 10 bei einem Luftfilter einer Brennkraftmaschine eines Kraftfahrzeuges eingesetzt werden.

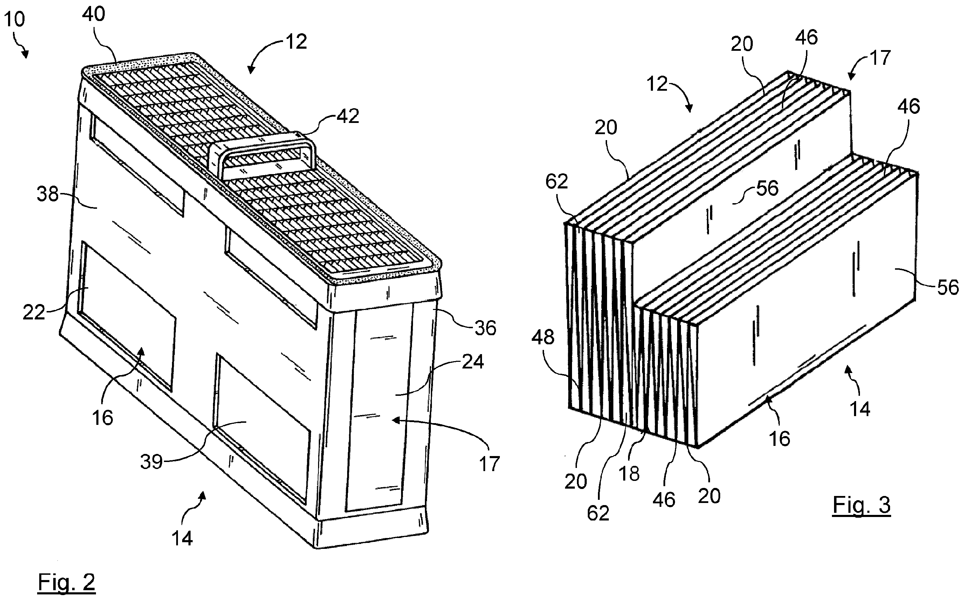

Das Filterelement 10 weist eine rohfluidseitige Anströmseite 12 und eine reinfluidseitige Abströmseite 14 auf. Das Filterelement 10 umfasst einen Filterbalg 17 aus einem mehrfach zickzackförmig gefalteten Filtermedium 16. Ein Ausschnitt des Filterbalges 17 ist in der Figur 3 gezeigt. Falten 18 des Filtermediums 16 erstrecken sich zwischen der Anströmseite 12 und der Abströmseite 14. Es befindet sich jeweils eine Faltenspitze 20 einer Falte 18 auf der Anströmseite 12 und der Abströmseite 14. Nicht durchströmbare Seitenflächen 22 des Filterelementes 10 sind von einem Polyestervlies umgeben, welches auf seiner dem Filterelement 10 zugewandten Seite mit einer Schmelzklebstoffschicht versehen ist. Diese Schmelzklebstoffschicht stellt eine flächige Verklebung des Polyestervlieses mit dem Filterelement 10 her, wobei auch Stirnseiten 24 des Filterbalgs 17 abgedichtet werden. Das Filterelement 10 umfasst einen Hauptrahmen 26 und einen Hilfsrahmen 28. Der Hauptrahmen 26 trägt eine axiale Dichtung 30, welche in Richtung zur Abströmseite 14 dichtet und in einer Nut des Hauptrahmens 26 oder in einer Nut zwischen Hauptrahmen 26 und Seitenflächen 22 eingebracht ist. Der Hilfsrahmen 28 ist mit den Seitenflächen 22 durch eine Klebeverbindung verbunden und weist radiale Flächen 32 und axiale Flächen 34 zur Abstützung des Filterelementes 10 in einem nicht dargestellten Filtergehäuse auf.

Figur 2 zeigt ein weiteres Ausführungsbeispiel eines Filterelementes 10, welches zu dem ersten Ausführungsbeispiel aus der Figur 1 ähnlich ist. Diejenigen Elemente, die zu denen des ersten Ausführungsbeispiels aus Figur 1 ähnlich sind, sind mit denselben Bezugszeichen versehen. Beim zweiten Ausführungsbeispiel ist auf den nicht durchströmbaren Seitenflächen 22 des Filtermediums 16 ein Kunststoffrahmen 36 mittels einer Schmelzklebstoffverbindung aufgebracht. Auf den Stirnseiten 24 erfolgt durch den Schmelzklebstoff auch die Abdichtung der Stirnseite 24. Auf Endseiten 38 sind Öffnungen 39 in den Kunststoffrahmen 36 eingebracht. Der Kunststoffrahmen 36 trägt auf der Anströmseite 12 eine axiale Dichtung 40, welche mit einer entsprechenden Dichtfläche eines nicht gezeigten Filtergehäuses in Eingriff bringbar ist. Ferner ist ein Griff 42 vorgesehen, welcher mit dem Kunststoffrahmen 36 in Verbindung steht und zur besseren Handhabung des Filterelementes 10 dient.

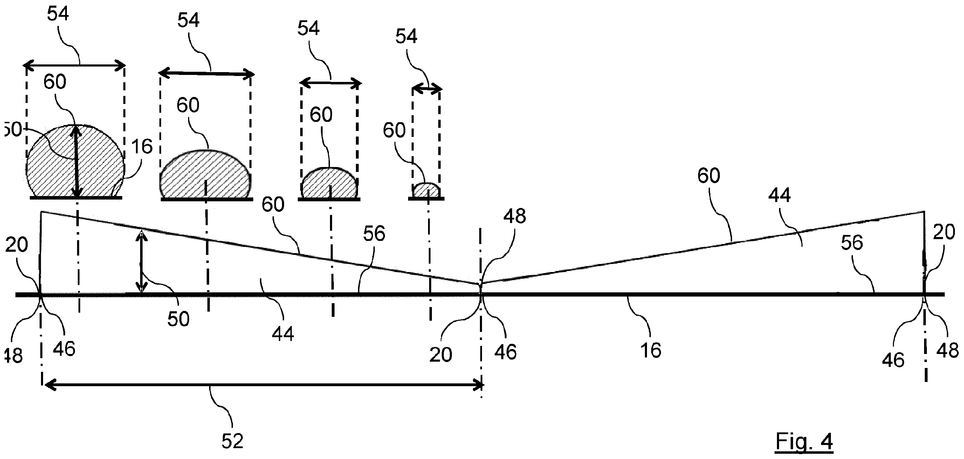

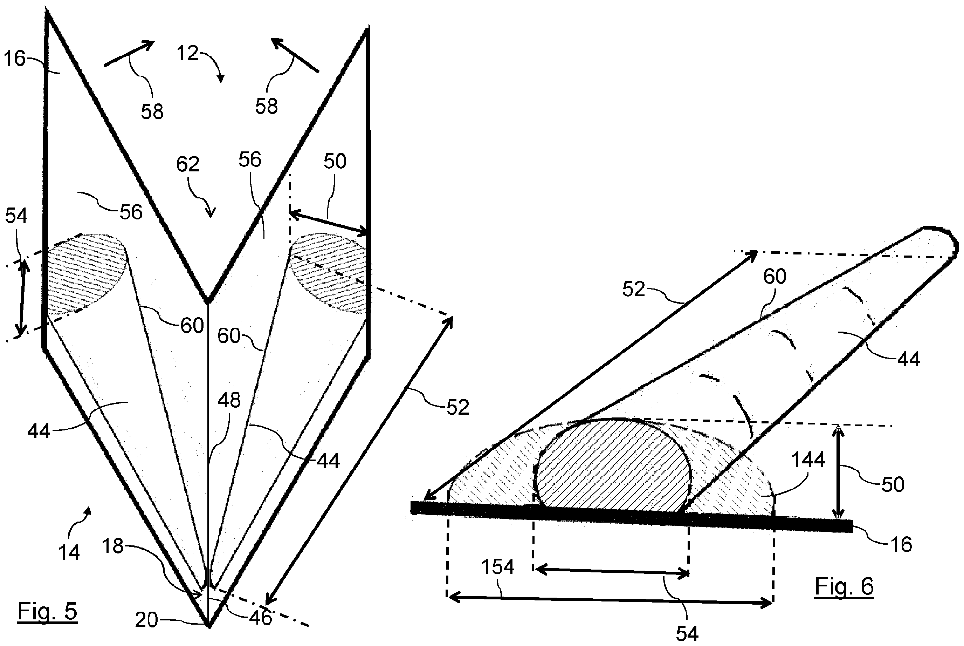

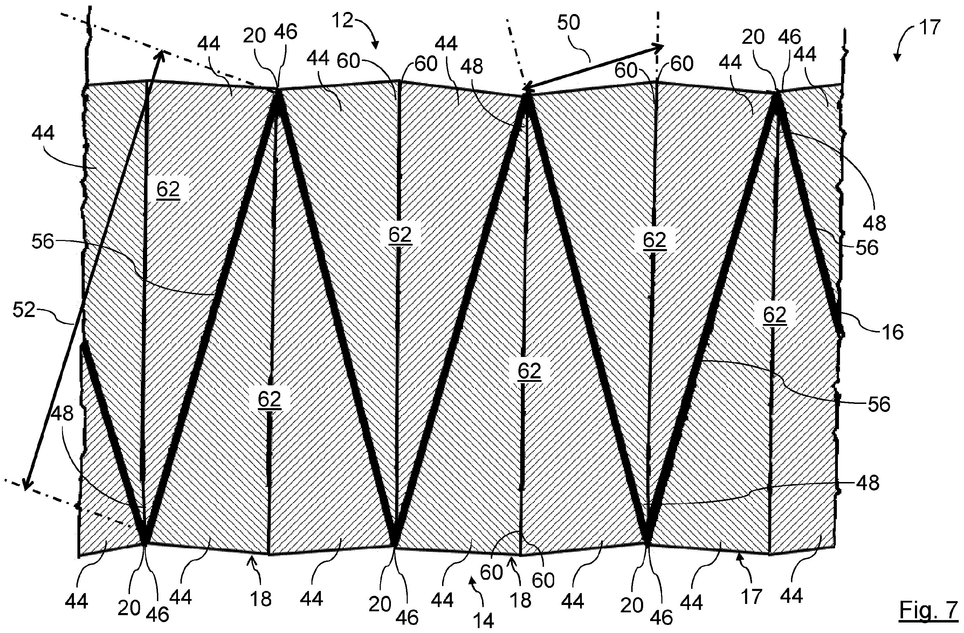

In der Figur 4 ist ein Ausschnitt des ausgestreckten Filtermediums 16 des Filterbalgs 17 vor dem Falten in einer Seitenansicht gezeigt. Auf einer Seite des Filtermediums 16 sind Stützabschnitte 44 aus Schmelzklebstoff angeordnet. Der Schmelzklebstoff kann beispielsweise auf Basis von Polyamid, Polyolefin oder Ethylenvinylacetat (EVA) sein. Die Stützabschnitte 44 haben eine längliche Form. Sie verlaufen senkrecht zu geprägten Faltkanten 46. Die Positionen der Faltkanten 46 sind in der Figur 4 durch strich-punktierte Linien angedeutet. Beim späteren Aufstellen der Falten 18 des Faltenbalgs 17 wird das Filtermedium 16 entlang der Faltkanten 46 gefaltet. Entlang der in der Figur 4 mittleren Faltkante 16 wird bei dem gefalteten Filterbalg 17 auf der in der Figur 4 gezeigten unteren Seite des Filtermediums 16 eine Faltenspitze 20 realisiert. Auf der gegenüberliegenden Seite des Filtermediums 16, in der Figur 4 oben, wird entlang der mittleren Faltkante 46 ein Faltengrund 48 eines dortigen, in den Figuren 5 und 7 gezeigten Faltenzwischenraums 62 gebildet. Bei den in der Figur 4 beiden äußeren Faltenkanten 46 sind die Faltenspitzen 20 und die Faltengründe 48 jeweils umgekehrt angeordnet.

Die Stützabschnitte 44 einer Falte 18 sind im Wesentlichen symmetrisch aufgebaut. Eine jeweilige Höhenausdehnung 50 der Stützabschnitte 44 senkrecht zu der Oberfläche des Filtermediums 16, die in der Figur 4 durch einen Doppelpfeil angedeutet ist, nimmt entlang deren Längenausdehnung 52, in der Figur 4 ebenfalls angedeutet durch einen Doppelpfeil, in Richtung von einem Faltengrund 48 zu einer Faltenspitze 20 einer Falte 18 des Filtermediums 16 zu. Die Höhenausdehnung 50 beschreibt die Ausdehnung einer Querschnittsfläche des Stützabschnitts 44 an ihrer höchsten Stelle. Eine Breitenausdehnung der Stützabschnitte 44 parallel zu der Oberfläche des Filtermediums 16 und senkrecht zu seiner Längsausdehnung 52, nimmt in Richtung von der Faltenspitze 20 zu dem Faltengrund 48 der Falte 18 ab. In der Figur 4 sind über dem linken Mediumabschnitt 56 des Filtermediums 16 beispielhaft Querschnitte des darunter gezeigten Stützabschnittes 44 in vier in Längsrichtung des Stützabschnitts 44 voneinander entfernten Schnittebenen dargestellt. Die jeweilige Breitenausdehnung 54 der Querschnitte ist jeweils mit Doppelpfeilen angedeutet. Die Breitenausdehnung 54 beschreibt die Breite des Querschnitts des Stützabschnittes 44 an seiner breitesten Stelle. Die Stützabschnitte 44 weisen im Querschnitt auf ihren den Filtermedium 16 abgewandten Seiten einen ellipsenartigen Verlauf auf. Auf ihren dem Filtermedium 16 zugewandten Seiten sind die Stützabschnitte 44 im Querschnitt abgeflacht. Ein Verhältnis der Höhenausdehnung 50 der Querschnitte der Stützabschnitte 44 zu ihrer Breitenausdehnung 54 ist über die Längsrichtung etwa konstant. Bevorzugt liegt das Verhältnis der Höhenausdehnung 50 zur Breitenausdehnung 54 zwischen etwa 1/5 und etwa 5/5. Vorzugsweise ist es größer als etwa 3/5. Die beiden Stützabschnitte 44 des späteren Faltenzwischenraums 62 sind im Bereich der in der Figur 4 mittleren Faltkante 46 miteinander verbunden. Ebenso sind die Stützabschnitte 44 mit sich anschließenden, in der Figur 4 nicht gezeigten, Stützabschnitten der benachbarten Faltenzwischenräume 62 verbunden. Die miteinander verbundenen Stützkantenabschnitte 44 kann man als zusammenhängenden Stützkantenabschnitt bezeichnen, die sich über die Faltkanten 46 erstrecken.

In der Figur 6 ist ein Ausschnitt eines der Stützabschnitte 44 des Filtermediums 16 aus den Figuren 4 und 5 in einer Schrägansicht gezeigt. Ein Querschnitt eines alternativen Stützabschnittes 144 mit einem kleineren Verhältnis der Höhenausdehnung 50 zu einer Breitenausdehnung 154 ist dort mit einer gestrichelten Umfangslinie und einer gestrichelten Schraffur angedeutet.

In der Figur 5 ist ein Ausschnitt des Filtermediums 16 aus der Figur 4 in einer Phase beim Aufstellen der Falten 18 gezeigt. Die beiden Mediumabschnitte 56 werden entlang der Faltkante 46 zueinander hin gefaltet, was in der Figur 5 durch zwei Pfeile 58 angedeutet ist. Das aufstellen der Falten 18 erfolgt solange der Schmelzkleber der Stützabschnitte 44 noch weich und klebfähig ist. Nach dem Aufstellen der Falten 18 liegen dem Filtermedium 16 jeweils abgewandte freie Seiten 60 der Stützabschnitte 44 in dem Faltenzwischenraum 62 flächig aneinander an. Dies ist in der Figur 7 gezeigt. Nach dem Aufstellen sind die Falten 18 jeweils V-förmig. Die gegenüberliegenden Seiten 60 der beiden Stützabschnitte 44 werden beim Aufstellen der Falten 18 aneinander gepresst und verkleben dabei. Die Verklebung zwischen den Seiten 60 erfolgt dabei in Längsrichtung der Stützabschnitte 44 entlang einer schmalen Fläche. Je nach Breitenausdehnung 54 und Anpressdruck auf die Stützabschnitte 44 wird die Verklebungsfläche entsprechend ausgebreitet. Die Stützabschnitte 44 können dabei abgeflacht werden.

Bei dem in der Figur 7 dargestellten fertig gefalteten Filterbalg 17 sind im Unterschied zu den Figuren 4 und 5 gezeigten beide Seiten des Filtermediums 16 mit entsprechenden Stützabschnitten 44 versehen. Die aneinander liegenden Stützabschnitte 44 stützen sich gegenseitig ab und halten so die Falten 18 in der vorgesehenen Form. Darüber hinaus verhindern die Stützabschnitte 44, dass die Falten 18 kollabieren. Im Übrigen können die Stützabschnitte 44 einen Strömungsverlauf des Fluides in den Faltenzwischenräumen 62 günstig beeinflussen. Die Stützabschnitte 44 können beispielsweise auch so im Bereich der Faltenkanten 46 des Filterbalgs 17 angeordnet sein, dass sie den Filterbalg 17 und damit die Faltenzwischenräume 62 nach außen hin abdichten können.

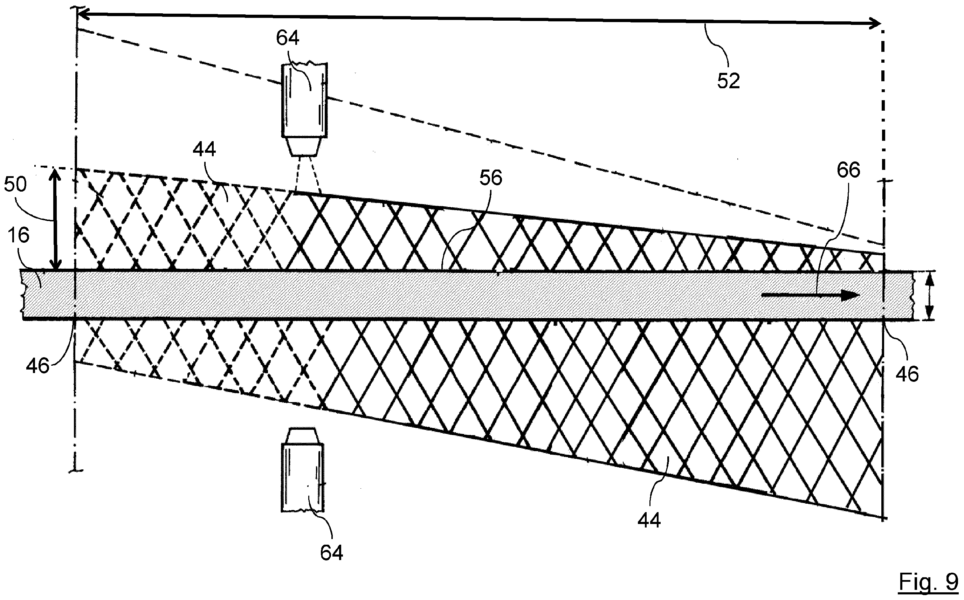

Ein Beispiel für eine Anordnung der Stützabschnitte 44 auf gegenüberliegenden Seiten des Filtermediums 16 ist in der Figur 9 gezeigt. Dort ist auch eine Düsenanordnung mit zwei gegenüberliegenden Düsen 64 dargestellt, mit denen der Schmelzklebstoff zur Realisierung der Stützabschnitte 44 auf das Filtermedium 16 gesprüht wird. Dabei wird das bahnförmige Filtermedium 16, in der Figur 9 angedeutet durch einen Pfeil 66, zwischen den beiden Düsen 64 hindurch gezogen. Der besseren Übersichtlichkeit wegen ist in der Figur 9 nur ein Ausschnitt des Filtermediums 16 zwischen zwei benachbarten Faltkanten 46 gezeigt, welche jeweils durch punktgestrichelte Linien angedeutet ist.

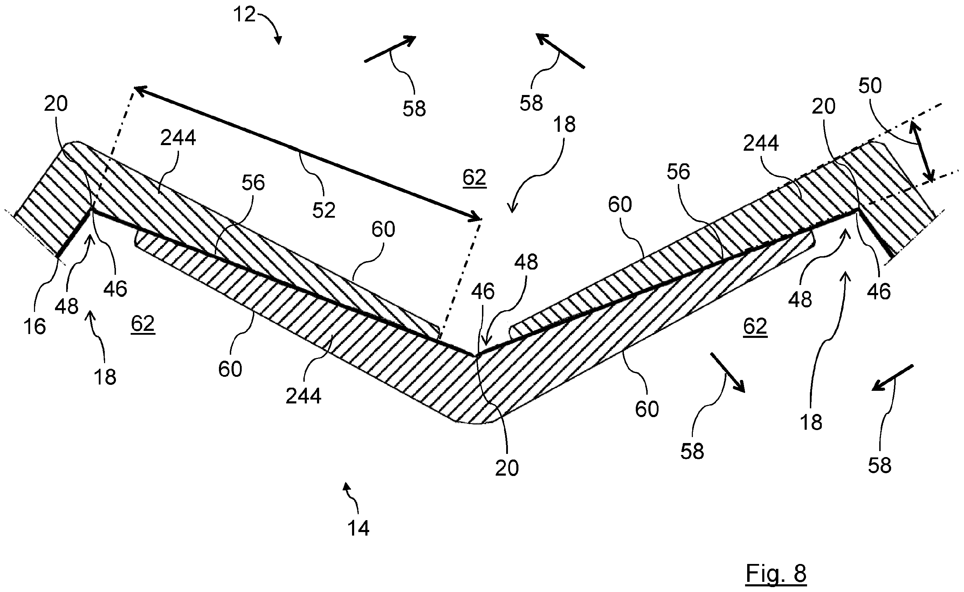

In der Figur 8 ist ein Ausschnitt eines weiteren Ausführungsbeispiels eines Filterbalgs 17 gezeigt, bei dem bei einem Produktionsprozess die Falten 16 noch nicht ganz aufgestellt sind. Im Unterschied zu dem Ausführungsbeispiel aus den Figuren 4 bis 7 enden die Stützabschnitte 244 bei dem Ausführungsbeispiel aus der Figur 8 in den Faltengründen 48 in einem Abstand zu den dortigen Faltkanten 46. Beim weiteren Aufstellen der Falten 18 wird auf diese Weise vermieden, dass etwa überschüssiger Klebstoff die Falten 18 im Bereich der Faltengründe 48 auseinanderdrückt was zu einer Aufbauchung der Faltenzwischenräume 62 führen kann. Dadurch würde die V-Form der Falten 18 zerstört. Auf der Seite der Faltenspitzen 20 erstrecken sich die Stützabschnitte 244 über die Faltkanten 46 hinweg.

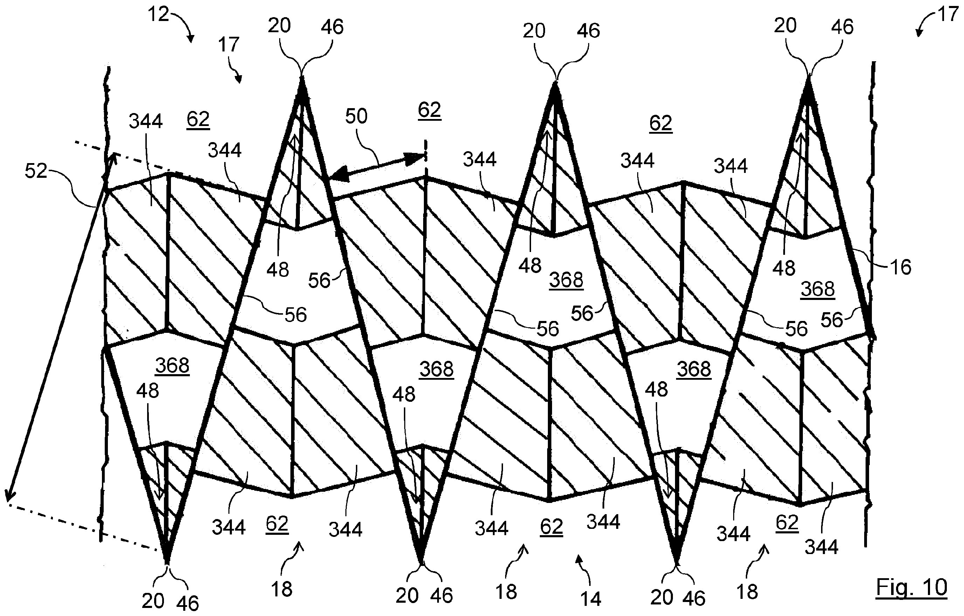

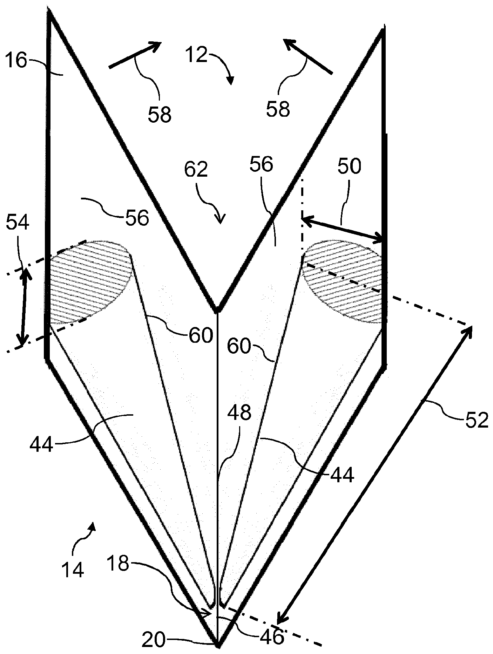

In der Figur 10 ist ein Ausschnitt eines weiteren Ausführungsbeispiels eines Filterbalgs 17 gezeigt. Im Unterschied zum ersten Ausführungsbeispiel aus der Figur 7 sind beim zweiten Ausführungsbeispiel in der Figur 10 Stützabschnitte 344 in jedem Faltenzwischenraum 62 unterbrochen. Die Stützabschnitte 344 enden auch in einem Abstand zu den Faltenspitzen 20. Unterbrechungen 368 der Stützabschnitte 344 auf den gegenüberliegenden Seiten des Filtermediums 16, also auf der Rohfluidseite, der Anströmseite 12, und der Reinfluidseite, der Abströmseite 14, sind versetzt zueinander angeordnet. Damit ist sichergestellt, dass sowohl im Bereich der Faltenspitzen 20, als auch in der Nähe der Faltengründe 48 eine Überlappung der reinfluidseitigen und rohfluidseitigen Stützabschnitte 44 gebildet ist. Auf der Rohfluidseite und auf der Reinfluidseite sind durch die Unterbrechungen 368 getrennte Segmente der Stützabschnitte so angeordnet, dass jeweils eines der Segmente auf der Rohfluidseite jeweils eine der Unterbrechungen 368 auf der Reinfluidseite in Richtung der Längenausdehnung 52 beidseitig überragt und mit seinen Enden mit den Segmenten des Stützabschnitts 344 auf der Reinfluidseite überlappt, die an die dortige Unterbrechung 368 angrenzen. Eines der Segmente eines Stützabschnitts 344 auf der Reinfluidseite überragt die Unterbrechung 368 auf der Rohfluidseite beidseitig und überlappt mit seinen Enden mit den Segmenten des Stützabschnitts 344 auf der Rohfluidseite, die an die dortige Unterbrechung 368 angrenzen.

Bei allen oben beschriebenen Ausführungsbeispielen eines Filterelements 10 und eines Filters sind unter anderem folgende Modifikationen möglich:
Die Erfindung ist nicht beschränkt auf Luftfilterelemente für Brennkraftmaschinen von Kraftfahrzeugen. Vielmehr kann sie auch bei andersartigen Brennkraftmaschinen, beispielsweise Industriemotoren, eingesetzt werden. Die Erfindung kann auch außerhalb der Kraftfahrzeugtechnik verwendet werden. Das Filterelement 10 kann auch zu Filtrierung andere Fluide, beispielsweise Öl, Kraftstoff oder Wasser, eingesetzt werden.

Die Stützabschnitte 44; 144; 244; 344 können zumindest auf ihrer dem Filtermedium 16 abgewandten Seite statt eines ellipsenartigen auch einen andersartigen, beispielsweise einen kreisartigen Verlauf haben.

Die Stützabschnitte 44; 144; 244; 344 können mit ihren dem jeweiligen Mediumabschnitt 56 abgewandten freien Seiten 60 statt an einem gegenüberliegenden Stützabschnitt 44; 144; 244; 344 auch an der Oberfläche des im Faltenzwischenraum 62 gegenüberliegenden Mediumabschnitts 56 anliegen und mit diesem verklebt sein.

Anstelle von Schmelzklebstoff kann auch ein andersartiger Klebstoff zur Realisierung der Stützabschnitte 44; 144; 244; 344 verwendet werden. Anstelle von Klebstoff kann auch ein andersartiges, insbesondere zum Zwecke der Aufbringung formbares Material zur Realisierung der Stützabschnitte 44; 144; 244; 344 verwendet werden.

Der Schmelzklebstoff kann auch aufgeschäumt werden. Die Stützabschnitte 44; 144; 344, 244 können so jeweils zu 50 % aus Schmelzklebstoff und zu 50 % aus eingeschäumtem Gas bestehen. Es kann auch mehr als 50 % eingeschäumtes Gas vorgesehen sein.

Das Verhältnis der Höhenausdehnung 50 zur Breitenausdehnung 54 der Stützabschnitte 44; 144; 244; 344 in einer Querschnittsebene kann in Richtung der Längenausdehnung 52 auch variieren.

Die Falten 18 des Filterbalgs 17 können statt V-förmig auch andersförmig, beispielsweise U-förmig, sein. Die Falten 18 können im Bereich der Faltengründe 48 auch abgestuft sein. In einem Bereich des jeweiligen Faltengrundes 48 kann eine sich von der entsprechenden Faltkante 46 aus progressiv aufweitende V-Form vorgesehen sein. Im Anschluss an den V-förmigen Bereich können die gegenüberliegenden Mediumabschnitte 56, die einen Faltenzwischenraum 62 der Falte 18 begrenzen, parallel zueinander verlaufen.

Beim Ausführungsbeispiel aus der Figur 10 können die Unterbrechungen 368 auch anders angeordnet sein. Es können auch mehr oder weniger Unterbrechungen vorgesehen sein. Die Stützabschnitte 344 können sich auch über die entsprechenden Faltenspitzen 20 erstrecken. Die Faltengründe 48 können auch frei von Stützabschnitten 344 sein.

## Patentansprüche

1. Filterelement (10) eines Filters zur Filtrierung von Fluiden, insbesondere von Gasen, insbesondere von Ansaugluft, insbesondere einer Brennkraftmaschine, insbesondere eines Kraftfahrzeugs, mit einem zickzackförmig gefalteten Filtermedium (16) mit einer Rohfluidseite (12) und einer Reinfluidseite (14), wobei auf der Rohfluidseite (12) und/oder auf der Reinfluidseite (14) des Filtermediums (16) wenigstens ein länglicher Stützabschnitt (44; 144; 244; 344) auf einer entsprechenden Oberfläche des Filtermediums (16) angeordnet ist, wobei der wenigstens eine Stützabschnitt (44; 144; 244; 344) aus einem Klebstoff realisiert ist und wenigstens abschnittsweise schräg oder senkrecht zu Faltkanten (46) des Filtermediums (16) verläuft, wobei eine Höhenausdehnung (50) des wenigstens einen Stützabschnitts (44; 144; 244; 344) senkrecht zu der Oberfläche des Filtermediums (16) entlang seiner Längsrichtung (52) in Richtung von einem Faltengrund (48) zu einer Faltenspitze (20) einer Falte (18) des Filtermediums (16) zunimmt, so dass der wenigstens eine Stützabschnitt (44; 144; 244; 344) bei dem gefalteten Filtermedium (16) jeweils mit seiner der Oberfläche des Filtermediums (16) abgewandten freien Seite (60) an einer entsprechenden freien Seite (60) eines in einem Faltenzwischenraum (62) gegenüberliegenden Stützabschnitts (44; 144; 244; 344) oder an der Oberfläche eines im Faltenzwischenraum gegenüberliegenden Mediumabschnitts anliegt, **dadurch gekennzeichnet, dass** eine Breitenausdehnung (54) des wenigstens einen aus Klebstoff realisierten Stützabschnitts (44; 144; 244; 344) parallel zu der Oberfläche des Filtermediums (16) und senkrecht zu seiner Längsrichtung (52) in Richtung von der Faltenspitze (20) zu dem Faltengrund (48) der Falte (18) des Filtermediums (16) abnimmt, und dass in dem Faltenzwischenraum (62) aneinander anliegende Seiten (60) des wenigstens einen Stützabschnitts (44; 144; 244; 344) und des gegenüberliegenden Stützabschnitts (44; 144; 244; 344) oder des gegenüberliegenden Mediumabschnitts miteinander verklebt sind.

2. Filterelement nach Anspruch 1, **dadurch gekennzeichnet, dass** der wenigstens eine Stützabschnitt (44; 144; 244; 344) zumindest auf seiner dem Filtermedium (16) abgewandten Seite eine senkrecht zu seiner Längsrichtung (52) gewölbte Oberfläche, insbesondere der wenigstens eine Stützabschnitt (44; 144; 244; 344) zumindest auf seiner dem Filtermedium (16) abgewandten Seite einen Querschnitt ähnlich einem Segment einer kreisartigen oder ellipsenartigen Fläche hat.

3. Filterelement nach Anspruch 1 oder 2, **dadurch gekennzeichnet, dass** ein Verhältnis der Höhenausdehnung (50) des wenigstens einen Stützabschnitts (44; 144; 244; 344) zu der Breitenausdehnung (54) über die Längenausdehnung (52) etwa konstant ist.

4. Filterelement nach einem der vorigen Ansprüche, **dadurch gekennzeichnet, dass** das Verhältnis der Höhenausdehnung (50) zur Breitenausdehnung (54) zwischen etwa 1/5 und etwa 5/5, vorzugsweise größer als etwa 3/5, ist.

5. Filterelement nach einem der vorigen Ansprüche, **dadurch gekennzeichnet, dass** sich der wenigstens eine Stützabschnitt (44; 144; 244; 344) über wenigstens eine Faltkante (46) erstreckt.

6. Filterelement nach einem der vorigen Ansprüche, **dadurch gekennzeichnet, dass** sich der wenigstens eine Stützabschnitt (244) in einem Faltengrund (48) nicht über eine dortige Faltkante (46) erstreckt.

7. Filterelement nach einem der vorigen Ansprüche, **dadurch gekennzeichnet, dass** die Falten (18) des Filtermediums (16) etwa V-förmig sind.

8. Filterelement nach einem der vorigen Ansprüche, **dadurch gekennzeichnet, dass** in dem Faltenzwischenraum (62) aneinander anliegende Seiten (60) des wenigstens einen Stützabschnitts (44; 144; 244; 344) und des gegenüberliegenden Stützabschnitts (44; 144; 244; 344) oder des gegenüberliegenden Mediumabschnitts miteinander einen in Richtung der Breitenausdehnung (54) und in Richtung der Längenausdehnung (52) flächigen Kontakt haben.

9. Filterelement nach einem der vorigen Ansprüche, **dadurch gekennzeichnet, dass** der wenigstens eine Stützabschnitt (344) in Längsrichtung (52) wenigstens eine Unterbrechung (368) aufweist.

10. Filterelement nach dem vorigen Anspruch, **dadurch gekennzeichnet, dass** die Unterbrechungen (368) von Stützabschnitten (344), die auf gegenüberliegenden Seiten des Filtermediums (16) oder auf einer Seite des Filtermediums nebeneinander angeordnet sind, zueinander versetzt sind.

11. Filterelement nach einem der vorigen Ansprüche, **dadurch gekennzeichnet, dass** der wenigstens eine Stützabschnitt (44; 144; 244; 344) aus einem Schmelzklebstoff, insbesondere auf Basis von Polyamid, Polyolefin, Ethylenvinylacetat (EVA), realisiert ist.

12. Filterelement nach einem der vorigen Ansprüche, **dadurch gekennzeichnet, dass** der wenigstens eine Stützabschnitt aus einem aufgeschäumten Klebstoff realisiert ist.

13. Filter zur Filtrierung von Fluiden, insbesondere von Gasen, insbesondere von Ansaugluft, insbesondere einer Brennkraftmaschine, insbesondere eines Kraftfahrzeugs, mit einem Filterelement (10), nach einem der vorigen Ansprüche.

## Claims

1. Filter element (10) of a filter for filtering fluids, in particular gases, in particular intake air, in particular of an internal combustion engine, in particular of a motor vehicle, having a zigzag-folded filter medium (16) with a raw fluid side (12) and a clean fluid side (14), wherein on the raw fluid side (12) and/or on the clean fluid side (14) of the filter medium (16) at least one elongated support section (44; 144; 244; 344) is disposed on a corresponding surface of the filter medium (16), wherein the at least one support section (44; 144; 244; 344) is realized by means of an adhesive and extends at least sectionwise in an inclined or perpendicular manner relative to the fold edges (46) of the filter medium (16), wherein a height extension (50) of the at least one support section (44; 144; 244; 344) increases perpendicularly relative to the surface of the filter medium (16) along its longitudinal direction (52) in the direction from a fold base (48) towards a fold tip (20) of a fold (18) of the filter medium (16) in such a way that the at least one support section (44; 144; 244; 344) contacts, if the filter medium (16) is folded, with its free side (60) facing away from the surface of the filter medium (16), a corresponding free side (60) of an opposing support section (44; 144; 244; 344) in an intermediate fold space (62) or the surface of an opposing media section in the intermediate fold space, **characterized in that** a width extension (54) of the at least one support section (44; 144; 244; 344) realized by means of an adhesive decreases parallel relative to the surface of the filter medium (16) and perpendicular relative to its longitudinal direction (52) in the direction from the fold tip (20) towards the fold base (48) of the fold (18) of the filter medium (16), and **in that** in the intermediate fold space (62) abutting sides (60) of the at least one support section (44; 144; 244; 344) and of the opposing support section (44; 144; 244; 344) or of the opposing media section are glued together.

2. Filter element according to claim 1, **characterized in that** the at least one support section (44; 144; 244; 344) has at least on its side facing away from the filter medium (16) a curved surface perpendicular relative to its longitudinal direction (52), in particular the at least one support section (44; 144; 244; 344) has at least on its side facing away from the filter medium (16) a cross-section that resembles a segment of a circular or elliptical plane.

3. Filter element according to claim 1 or 2, **characterized in that** a ratio between the height extension (50) of the at least one support section (44; 144; 244; 344) and the width extension (54) over the length extension (52) is approximately constant.

4. Filter element according to one of the above claims, **characterized in that** the ratio between the height extension (50) and the width extension (54) is between approximately 1/5 and approximately 5/5, preferably larger than approximately 3/5.

5. Filter element according to one of the above claims, **characterized in that** the at least one support section (44; 144; 244; 344) extends at least over one fold edge (46).

6. Filter element according to one of the above claims, **characterized in that** the at least one support section (244) does not extend in a fold base (48) over a fold edge (46) located there.

7. Filter element according to one of the above claims, **characterized in that** the folds (18) of the filter medium (16) are approximately V-shaped.

8. Filter element according to one of the above claims, **characterized in that** in the intermediate fold space (62) abutting sides (60) of the at least one support section (44; 144; 244; 344) and of the opposing support section (44; 144; 244; 344) or of the opposing media section have a planar contact with one another in the direction of the width extension (54) and in the direction of the length extension (52).

9. Filter element according to one of the above claims, **characterized in that** the at least one support section (344) features at least one discontinuity (368) in longitudinal direction (52).

10. Filter element according to the previous claim, **characterized in that** the discontinuities (368) of support sections (344), which are disposed on opposing sides of the filter medium (16) or on one side of the filter medium adjacent to each other, are offset from one another.

11. Filter element according to one of the above claims, **characterized in that** the at least one support section (44; 144; 244; 344) is made of a hot-melt adhesive, in particular on the basis of polyamide, polyolefin, ethylene vinyl acetate (EVA).

12. Filter element according to one of the above claims, **characterized in that** the at least one support section is made of a foamed adhesive.

13. Filter for filtering fluids, in particular gases, in particular intake air, in particular of an internal combustion engine, in particular of a motor vehicle, with a filter element (10) according to one of the above claims.

## Revendications

1. Élément filtrant (10) d'un filtre destiné au filtrage de fluides, en particulier de gaz, en particulier d'air d'aspiration, en particulier d'un moteur à combustion interne, en particulier d'un véhicule automobile, avec un milieu filtrant (16) plié en accordéon avec un côté de fluide brut (12) et un côté de fluide pur (14), au moins une section d'appui longitudinale (44 ; 144 ; 244 ; 344) étant prévue du côté de fluide brut (12) et/ou du côté de fluide pur (14) du milieu filtrant (16) sur une surface correspondante du milieu filtrant (16), la section d'appui (44 ; 144 ; 244 ; 344), au moins au nombre d'une, étant constituée d'une colle et s'étendant, au moins sur certaines sections, en travers ou verticalement par rapport à des bords de pliage (46) du milieu filtrant (16), une étendue en hauteur (50) de la section d'appui (44 ; 144 ; 244 ; 344), au moins au nombre d'une, augmentant verticalement par rapport à la surface du milieu filtrant (16), le long de son sens longitudinal (52), d'un fond de pli (48) vers une crête (20) d'un pli (18) du milieu filtrant (16), de sorte que la section d'appui (44 ; 144 ; 244 ; 344), au moins au nombre d'une, touche, lorsque le milieu filtrant (16) est plié, avec son côté libre (60) opposé à la surface du milieu filtrant (16), un côté libre correspondant (60) d'une section d'appui (44 ; 144 ; 244 ; 344) opposée située dans un interstice de pliage (62) ou une surface d'une section du milieu opposée située dans l'interstice de pliage, **caractérisé en ce qu'**une étendue en largeur (54) de la section d'appui (44 ; 144 ; 244 ; 344), au moins au nombre d'une et constituée de colle, diminue parallèlement par rapport à la surface du milieu filtrant (16) et verticalement par rapport à son sens longitudinal (52), de la crête de pli (20) vers le fond (48) du pli (18) du milieu filtrant (16), et **en ce que**, dans l'interstice de pliage (62), des côtés adjacents (60) de la section d'appui (44 ; 144 ; 244 ; 344), au moins au nombre d'une, et de la section d'appui opposée (44 ; 144 ; 244 ; 344) ou de la section du milieu opposée sont collés les uns aux autres.

2. Élément filtrant selon la revendication 1, **caractérisé en ce que** la section d'appui (44 ; 144 ; 244 ; 344), au moins au nombre d'une, comporte, au moins de son côté opposé au milieu filtrant (16), une surface bombée verticalement par rapport à son sens longitudinal (52), la section d'appui (44 ; 144 ; 244 ; 344), au moins au nombre d'une, comportant notamment, au moins de son côté opposé au milieu filtrant (16), une section similaire à un segment d'une surface circulaire ou elliptique.

3. Élément filtrant selon la revendication 1 ou 2, **caractérisé en ce qu'**un rapport entre l'étendue en hauteur (50) de la section d'appui (44 ; 144 ; 244 ; 344), au moins au nombre d'une, et l'étendue en largeur (54) est pratiquement constant sur toute l'étendue en longueur (52).

4. Élément filtrant selon l'une des revendications précédentes, **caractérisé en ce que** le rapport entre l'étendue en hauteur (50) et l'étendue en largeur (54) est compris entre environ 1/5 et environ 5/5, et est de préférence supérieur à environ 3/5.

5. Élément filtrant selon l'une des revendications précédentes, **caractérisé en ce que** la section d'appui (44 ; 144 ; 244 ; 344), au moins au nombre d'une, s'étend sur le bord de pliage (46), au moins au nombre d'un.

6. Élément filtrant selon l'une des revendications précédentes, **caractérisé en ce que** la section d'appui (244), au moins au nombre d'une, ne dépasse pas, dans un fond de pli (48), un bord de pliage (46) situé à cet endroit.

7. Élément filtrant selon l'une des revendications précédentes, **caractérisé en ce que** les plis (18) du milieu filtrant (16) sont quasiment en forme de V.

8. Élément filtrant selon l'une des revendications précédentes, **caractérisé en ce que** dans l'interstice de pliage (62), des côtés adjacents (60) de la section d'appui (44 ; 144 ; 244 ; 344), au moins au nombre d'une, et de la section d'appui opposée (44 ; 144 ; 244 ; 344) ou de la section du milieu opposée ont un contact superficiel mutuel en direction de l'étendue en largeur (54) et en direction de l'étendue en longueur (52).

9. Élément filtrant selon l'une des revendications précédentes, **caractérisé en ce que** la section d'appui (344), au moins au nombre d'une, est dotée dans son sens longitudinal (52) d'au moins une interruption (368).

10. Élément filtrant selon la revendication précédente, **caractérisé en ce que** les interruptions (368) de sections d'appui (344) situées du côté opposé du milieu filtrant (16) ou d'un côté du milieu filtrant sont disposées les unes à côté des autres et sont décalées les unes par rapport aux autres.

11. Élément filtrant selon l'une des revendications précédentes, **caractérisé en ce que** la section d'appui (44 ; 144 ; 244 ; 344), au moins au nombre d'une, est constituée d'une colle thermofusible, notamment à base de polyamide, de polyoléfine, d'éthylène-acétate de vinyle (EVA).

12. Élément filtrant selon l'une des revendications précédentes, **caractérisé en ce que** la section d'appui, au moins au nombre d'une, est constituée d'une colle appliquée à l'état de mousse.

13. Filtre destiné au filtrage de fluides, en particulier de gaz, en particulier d'air d'aspiration, en particulier d'un moteur à combustion interne, en particulier d'un véhicule automobile, avec un élément filtrant (10) selon l'une des revendications précédentes.
